# EUROPÄISCHE PATENTSCHRIFT

(11) **EP 2 268 746 B1**
(45) Veröffentlichungstag und Bekanntmachung des Hinweises auf die Patenterteilung: **29.07.2015**
(21) Anmeldenummer: 09733840.4
(22) Anmeldetag: 09.04.2009
(51) Int. Cl.: C09C 1/00, C09D 5/03, C09D 5/36, C09D 7/12, C08K 3/00, C09D 17/00

(54) **PIGMENTPRÄPARATIONEN**
PIGMENT PREPARATIONS
PRÉPARATIONS PIGMENTAIRES

(30) Priorität: 23.04.2008 DE 102008020442
(43) Veröffentlichungstag der Anmeldung: 05.01.2011
(73) Patentinhaber: Merck Patent GmbH, 64293 Darmstadt (DE)
(72) Erfinder: WILHELM, Volker, 64563 Lorsch (DE)
(86) Internationale Anmeldenummer: PCT/EP2009/002681
(87) Internationale Veröffentlichungsnummer: WO 2009/129941

(56) Entgegenhaltungen:
- EP-A- 1 204 005
- DE-A1-102005 025 609
- DE-A1-102006 039 913
- US-A- 5 455 288

## Beschreibung

Die vorliegende Erfindung betrifft Pigmentpräparationen enthaltend ein oder mehrere plättchenförmige Effektpigmente sowie deren Verwendung zur Pigmentierung von Anwendungsmedien, insbesondere Farben, Lacke, Pulverlacke, Kunststoffe sowie zur Herstellung von Masterbatches.

Das Fließverhalten von Pigmenten auf Basis von plättchenförmigen Substraten, wie z.B. Glimmerplättchen, ist häufig unbefriedigend. Bei einer Vielzahl von Anwendungen, insbesondere im Druck- und Farbenbereich, führt dies nicht zu größeren Problemen. Bei der Einarbeitung in Kunststoffen jedoch erweist sich das schlechte Fließverhalten dieser Pigmente als problematisch.

Darüber hinaus kommt es bei der Verarbeitung von Perlglanzpigmenten, z.B. bei der Herstellung von Masterbatches, zu einer ausgeprägten Staubentwicklung, was einen erhöhten apparativen Aufwand zur Beseitigung der Stäube und zur Reinigung der Maschinen erfordert.

Es ist an sich bekannt Pigmente mit organischen Komponenten zu beschichten um die Einarbeitung der Pigmente, z.B. in Kunststoffe, Pulverlacken, Tonern, etc., zu erleichtern. Derartige Verfahren sind beispielsweise bekannt aus der DE 26 03 211, WO 2005/052076, WO 2005/019327, U.S. 2002/0098495 A1, DE 4317019, EP 1 204 005 A2, DE 10 2006 039913 A1, DE 10 2005 025609 A1 und US 5,455,288 A.

So wird beispielsweise in der U.S. 6,451,102 ein Verfahren zur Einbettung von Perlglanzpigmenten in ein Wachs vorgeschlagen um das Fließverhalten und insbesondere die Schüttdichte der plättchenförmigen Effektpigmente zu erhöhen.

Es hat sich aber gezeigt, dass die aus dem Stand der Technik bekannten Pigmentpräparationen enthaltend (> 50 %) ein Effektpigment und ein organisches Polymer oder Wachs häufig nicht oxidationsstabil sind und zur gefährlichen Selbsterhitzung neigen, obwohl derartige Präparationen nicht als leichtentzündliche Feststoffe (gemäß Prüfvorschrift A.10. Entzündlichkeit Fester Stoffe des Amtsblattes der Europäischen Gemeinschaften Nr. L 383 A/76 vom 29.12.1992) einzustufen sind.

Aufgabe der vorliegenden Erfindung ist daher die Bereitstellung von Pigmentpräparationen, die sich sehr gut in Anwendungsmedien einarbeiten lassen und gleichzeitig keine Neigung zur gefährlichen Selbsterhitzung zeigen.

Überraschenderweise wurde nun gefunden, dass Pigmentpräparationen enthaltend Effektpigmente und ein Wachs gegenüber der gefährlichen Selbsterhitzung stabil sind, wenn man ihnen ein Antioxidans zusetzt.

Gegenstand der vorliegenden Erfindung ist eine Pigmentpräparation gemäß Anspruch 1, die sich dadurch auszeichnet, dass sie ein oder mehrere plättchenförmige Effektpigmente, einen Wachs oder ein Wachsgemisch und mindestens ein Antioxidans enthält. Das Effektpigment ist dabei vorzugsweise auf der Oberfläche mit dem Wachs oder Wachsgemisch und mindestens einem Antioxidans verklebt bzw. teilweise oder vollständig beschichtet.

Derartige Pigmentpräparationen zeigen eine deutlich reduzierte Neigung zur Selbstentzündung und sind aufgrund ihrer guten Fließeigenschaften und der hohen Schüttdichte insbesondere geeignet zur Pigmentierung von Kunststoffen sowie bei der Herstellung von Masterbatches.

Gegenstand der vorliegenden Erfindung ist weiterhin ein Verfahren gemäß Anspruch 11 zur Herstellung der erfindungsgemäßen Pigmentpräparation, wobei ein oder mehrere plättchenförmige Effektpigmente und mindestens ein Antioxidans unter Wärmeeinfluss mit einem Wachs oder Wachsgemisch gemischt werden.

Die erfindungsgemäße Pigmentpräparation erweist sich als besonders vorteilhaft für die Einarbeitung in Kunststoffe. Darüber hinaus sind die erfindungsgemäßen Pigmentpräparationen nicht staubend und sehr gut rieselfähig, was den apparativen Aufwand bei ihrer Verarbeitung verringert. Zusätzlich kann bei Verwendung der erfindungsgemäßen Pigmentpräparationen auf einem Doppelschneckenextruder der Durchsatz, je nach Bedingungen, mindestens um den Faktor 2-5 gegenüber dem unpräparierten Pigment gesteigert werden. Weiterhin lassen sich unter Einsatz der erfindungsgemäßen Pigmentpräparation auf einem Einschneckenextruder Masterbatches mit einem Effektpigmentanteil von bis zu 50 Gew.-%, bezogen auf den Masterbatch, herstellen.

Wesentlicher Bestandteil der erfindungsgemäßen Pigmentpräparation ist neben dem Antioxidans das Wachs bzw. Wachsgemisch.

In dieser Anmeldung wird das Wachs wie folgt definiert:
bei 20 °C knetbar, fest bis brüchig hart, grob bis feinkristallin, durchscheinend bis opak, jedoch nicht glasartig; über 40 °C ohne Zersetzung schmelzend, schon wenig oberhalb des Schmelzpunktes verhältnismäßig niedrigviskos und nicht fadenziehend, stark temperaturabhängige Konsistenz und Löslichkeit, unter leichtem Druck polierbar. Wachse unterscheiden sich von ähnlichen synthetischen oder natürlichen Produkten (z.B. Harzen, plastischen Massen, Metallseifen usw.) hauptsächlich darin, dass sie in der Regel etwa zwischen 50 und 90 °C, in Ausnahmefällen auch bis etwa 200 °C, in den schmetzflüssigen, niedrigviskosen Zustand übergehen und praktisch frei von aschebildenden Verbindungen sind. Wachse bilden Pasten oder Gele und brennen in der Regel mit rußender Flamme.

Als Wachse werden bevorzugt Naturwachse, wie Pflanzenwacfise, z.B. Carnaubawachs, Candellilawachs, und tierische Wachse, z.B. Bienenwachs, modifizierte Naturwachse, wie z.B. Paraffinwachse. Mikrowachse, teilsynthetische Wachse, wie z.B. Montanesterwachse, oder vollsynthetische Wachse, wie Polyolefinwachse, z.B. Polyethylen und Polypropylenwachse, Polyethylenglykolwachse, Cycloolefinpolymerwachse, Amidwachse, wie z.B. N,N'-Distearylethylendiamin, Zirconocenwachse sowie chlor- oder fluorhaltige Polyolefinwachse oder Polyethylen-Polytetrefluorethylen-Wachsmischungen eingesetzt.

Besonders bevorzugt sind Polyolefinwachse, sowie polare Gruppen enthaltende Polyolefinwachse, entstanden durch nachträgliche Oxidation des Polyolefinwachses, durch Pfropfreaktion mit Carbonsäure-, Carbonsäureester-, Carbonssäureanhydrid- oder Hydroxygruppen enthaltenden Monomeren oder durch Copolymerisation aus einem Olefin und einem Carbonsäure-, Carbonsäureester-, Carbonsäureanhydrid- oder Hydroxygruppen enthaltenden Monomer.

Wachse im Sinne der vorliegenden Erfindung können auch höhermolekulare Verbindungen sein, die einen wachsartigen Charakter aufweisen und vorzugsweise durch Polykondensations-, Polyadditions- oder Polymerisationsverfahren hergestellt wurden, z.B. thermoplastische Polyester-, Epoxid.-, Styrol-Acrylat-Copolymer Styrol-Butadien-Copolymer-, Cycloolefin-Copolymer-Harze. Um eine ausreichende Löslichkeit bei erhöhter Temperatur in organischen Lösungsmitteln zu besitzen, besitzen bevorzugte Wachse Molekulargewichte von 500 - 20.000 insbesondere von 1.000 - 15.000 und ganz besonders bevorzugt von 2.000 - 10.000.

Der Schmelzbereich der Wachse (bestimmt nach DIN 51007) liegt vorzugsweise im Bereich von 70 - 200 °C, insbesondere von 80 - 150 °C und ganz besonders bevorzugt von 90 - 130°C.

Ganz besonders bevorzugte Wachse sind solche, die mit einem Masterbatch gut verträglich sind, in den das Pigment eingebracht wird. Für das Einbringen in Polyolefin-Masterbatches sind Polyolefinwachse bevorzugt, z.B. Polyethylen- oder Polypropylenwachse.

Bevorzugte Wachse bzw. Wachsgemische haben einen Schmelzbereich von 70 - 200 °C, insbesondere von 90 - 130 °C.

Besonders bevorzugte Wachse sind Polyolefinwachse, insbesondere Polyethylenwachs. Weiterhin bevorzugt sind Montanesterwachse und deren Derivate und Amidwachse.

Der Anteil an Wachs bzw. Wachsgemisch in der erfindungsgemäßen Pigmentpräparation beträgt vorzugsweise 5 - 50 Gew.%, insbesondere 20 - 40 Gew.%, ganz besonders bevorzugt 25 - 35 Gew.% bezogen auf die Gesamtmasse der Präparation.

Je nach Einsatzgebiet der erfindungsgemäßen Pigmentpräparation kann die Menge und die Art des Wachses variieren, vor allem um die Verträglichkeit mit dem Anwendungsmedium zu gewährleistet. Selbstverständlich kann die erfindungsgemäße Pigmentpräparation auch ein Gemisch aus ein, zwei, drei oder mehr verschiedenen Wachsen enthalten um ein bestimmtes Eigenschaftsprofil zu erfüllen. Vorzugsweise enthält die erfindungsgemäße Pigmentpräparation aber nur ein Wachs, insbesondere ein Polyolefinwachs, ganz besonders bevorzugt ein Polyethylenwachs.

In der erfindungsgemäßen Pigmentpräparation liegen die Effektpigmente, das Antioxidans und das Wachs miteinander gemischt vor. Vorzugsweise wird das Effektpigment durch das Wachs zumindest partiell oder vollständig beschichte, d.h. komplett umhüllt. Eine vollständige Umhüllung und "Verklebung" des plättchenförmigen Effektpigmentes mit dem Wachs enthaltend das Antioxidans ist ganz besonders bevorzugt.

Bei den plättchenförmigen Effektpigmenten handelt es sich vorzugsweise um Perlglanzpigmente, Interferenzpigmente, Metalleffektpigmente, Mehrschichtpigmente mit transparenten, semitranspatenten und/oder opaken Schichten, holographische Pigmente, BiOCl- und/Oder LCP-Pigmente.

Gemäß der vorliegenden Erfindung einsetzbare Perlglanzpigmente, Interferenzpigmente, Metalleffektpigmente oder Mehrschichtpigmente mit transparenten, semitransparenten und/oder opaken Schichten basieren insbesondere auf Trägern, wobei dieser vorzugsweise plättchenförmig ist. Beispielsweise eignen sich plättchenförmiges -TiO₂, synthetischer (z.B. Fluorophlogopit) oder natürlicher Glimmer, dotierte oder undotierte Glasplättchen, Metallplättchen, plättchenförmiges SiO₂, Al₂O₃ oder plättchenförmiges Eisenoxid. Die Metallplättchen können unter anderem aus Aluminium, Titan, Bronze, Stahl oder Silber bestehen, vorzugsweise Aluminium und/oder Titan. Die Metallplättchen können dabei durch entsprechende Behandlung passiviert sein. Die Glasplättchen können aus allen dem Fachmann bekannten Glasarten bestehen, z.B. aus A-Glas, E-Glas, C-Glas, ECR-Glas, Altglas, Fensterglas, Borosilikatglas, Duran^{®}-Glas, Laborgeräteglas oder optisches Glas. Der Brechungsindex der Glasplättchen liegt vorzugsweise bei 1,45-1,80, insbesondere bei 1,50-1,70. Besonders bevorzugt bestehen die Glassubstrate aus C-Glas, ECR-Glas oder Borosilikatglas.

In einer bevorzugten Ausführungsform kann der Träger mit einer oder mehreren transparenten semitransparenten und/oder opaken Schichten enthaltend Metalloxide, Metalloxidhydrate, Metallsuboxide, Metalle, Metallfluoride, Metallnitride, Metalloxynitride oder Mischungen dieser Materialien beschichtet sein. Die Metalloxid-, Metalloxidhydrat-, Metallsuboxid-, Metall-, Metallfluorid-, Metallnitrid-, Metalloxynitridschichten oder die Mischungen hieraus können niedrig- (Brechzahl < 1.8) oder hochbrechend (Brechzahl ≥ 1.8) sein. Als Metalloxide und Metalloxidhydrate eignen sich alle dem Fachmann bekannten Metalloxide oder Metalloxidhydrate, wie z. B. Aluminiumoxid, Aluminiumoxidhydrat, Siliziumoxid, Siliziumoxidhydrat, Eisenoxid, Zinnoxid, Ceroxid, Zinkoxid, Zirkoniumoxid, Chromoxid, Titanoxid, insbesondere Titandioxid, Titanoxidhydrat sowie Mischungen hieraus, wie z.B. Ilmenit oder Pseudobrookit. Als Metallsuboxide können beispielsweise die Titansuboxide eingesetzt werden. Als Metalle eignen sich z.B. Chrom, Aluminium, Nickel, Silber, Gold, Titan, Kupfer oder Legierungen, als Metallfluorid eignet sich beispielsweise Magnesiumfluorid. Als Metallnitride oder Metalloxynitride können beispielsweise die Nitride oder Oxynitride der Metalle Titan, Zirkonium und/oder Tantal eingesetzt werden. Bevorzugt werden Metalloxid-, Metall-, Metallfluorid und/oder Metalloxidhydratschichten und ganz besonders bevorzugt Metalloxid- und/oder Metalloxidhydratschichten auf den Träger aufgebracht. Weiterhin können auch Mehrschichtaufbauten aus hoch- und niedrigbrechenden Metalloxid-, Metalloxidhydrat-, Metall- oder Metallfluoridschichten vorliegen, wobei sich vorzugsweise hoch- und niedrigbrechende Schichten abwechseln. Insbesondere bevorzugt sind Schichtpakete aus einer hoch- und einer niedrigbrechenden Schicht, wobei auf dem Träger eine oder mehrere dieser Schichtpakete aufgebracht sein können. Die Reihenfolge der hoch- und niedrigbrechenden Schichten kann dabei an den Träger angepasst werden, um den Träger in den Mehrschichtaufbau mit einzubeziehen. In einer weiteren Ausführungsform können die Metalloxid-, MetaHoxidhydrat-, Metallsuboxid-, Metall-, Metallfluorid-, Metallnitrid-, Metalloxynitridschichten mit Farbmitteln oder anderen Elementen versetzt oder dotiert sein. Als Farbmittel oder andere Elemente eignen sich beispielsweise organische oder anorganische Farbpigmente wie farbige Metalloxide, z.B. Magnetit, Chromoxid oder Farbpigmente wie z.B. Berliner Blau, Ultramarin, Bismutvanadat, Thenards Blau, oder aber organische Farbpigmente wie z.B. Indigo, Azopigmente, Phthalocyanine oder auch Karminrot oder Elemente wie z.B. Yttrium oder Antimon. Effektpigmente enthaltend diese Schichten zeigen eine hohe Farbenvielfalt in Bezug auf ihre Körperfarbe und können in vielen Fällen eine winkelabhängige Änderung der Farbe (Farbflop) durch Interferenz zeigen.

Die äußere Schicht auf dem Träger ist in einer bevorzugten Ausführungsform ein hochbrechendes Metalloxid. Diese äußere Schicht kann zusätzlich auf den oben genannten Schichtpaketen oder bei hochbrechenden Trägern Teil eines Schichtpaketes sein und z.B. aus TiO₂, Titansuboxiden, Fe₂O₃, SnO₂, ZnO, ZrO₂, Ce₂O₃, CoO, Co₃O₄, V₂O₅, Cr₂O₃ und/oder Mischungen davon, wie zum Beispiel Ilmenit oder Pseudobrookit, bestehen. TiO₂ ist besonders bevorzugt, ferner Fe₂O₃. Sofern die Trägerplättchen mit Ti02 beschichtet sind liegt das TiO₂ vorzugsweise in der Rutilmodifikation vor, ferner in der Anatasmodifikation. Besonders bevorzugte Effektpigmente besitzen folgenden Aufbau:
Substratplättchen + TiO₂ (Rutil)
Substratplättchen + TiO₂ (Rutil)+ Fe₂O₃
Substratplättchen + Fe₂O₃
Substratplättchen + Fe₃O₄
Substratplättchen + SiO₂ + TiO₂ (Rutil)
Substratplättchen + TiO₂ (Rutil) + SiO₂ + TiO₂ (Rutil)
Substratplättchen + TiO₂ (Anatas) + SiO₂ + TiO₂ (Anatas).

In dieser Patentanmeldung bedeutet "hochbrechend" ein Brechungsindex von ≥ 1,8, während "niedrigbrechend" ein Brechungsindex von < 1,8 bedeutet.

Die Dicke der Metalloxid-, Metalloxidhydrat-, Metallsuboxid-, Metall-, Metallfluorid-, Metallnitrid-, Metalloxynitridschichten oder einer Mischung daraus beträgt üblicherweise 3 bis 300 nm und im Falle der Metalloxid-, Metalloxidhydrat-, Metallsuboxid-, Metallfluorid-, Metallnitrid-, Metalloxynitridschichten oder einer Mischung daraus vorzugsweise 20 bis 200 nm. Die Dicke der Metallschichten beträgt vorzugsweise 4 bis 50 nm.

Die Größe der Träger und damit der Effektpigmente ist an sich nicht kritisch. Plättchenförmige Träger und/oder mit einer oder mehreren transparenten oder semitransparenten Metalloxid-, Metall- oder Metallfluoridschichten beschichtete plättchenförmige Träger weisen in der Regel eine Dicke zwischen 0,05 und 5 µm, insbesondere zwischen 0,1 und 4,5 µm auf. Die Ausdehnung in der Länge bzw. Breite beträgt üblicherweise zwischen 1 und 250 µm, vorzugsweise zwischen 2 und 200 µm und insbesondere zwischen 2 und 100 µm.

Besonders bevorzugte Effektpigmente besitzen folgenden Schichtaufbau:
Glimmerplättchen + TiO₂
Glimmerplättchen + TiO₂ + Fe₂O₃
Glimmerplättchen + TiO₂/Fe₂O₃
Glimmerplättchen + Fe₂O₃
Glimmerplättchen + Fe₃O₄
Glimmerplättchen + Titanoxynitride
Glimmerplättchen + TiO₂ + SiO₂ + TiO₂
Glimmerplättchen + TiO₂/Fe₂O₃
Glimmerplättchen + TiO₂/Fe₂O₃ + SiO₂ + TiO₂
Glimmerplättchen + TiO₂/Fe₂O₃ + SiO₂ + TiO₂/Fe₂O₃
Glimmerplättchen + TiO₂ + SiO₂ + TiO₂/Fe₂O₃
Al₂O₃-Plättchen + TiO₂
Al₂O₃-Plättchen + Fe₂O₃
Al₂O₃-Plättchen + Titanoxynitride
SiO₂-Plättchen + TiO₂
SiO₂-Plättchen + Fe₂O₃
SiO₂-Plättchen + Titanoxynitride
Glasplättchen + TiO₂
Glasplättchen + Fe₂O₃
Glasplättchen + TiO₂ + Fe₂O₃
Glasplättchen + SiO₂ + TiO₂
Glasplättchen + SiO₂ + Fe₂O₃
Glasplättchen + SiO₂ + TiO₂ + Fe₂O₃
Glasplättchen + SiO₂ + TiO₂ + SiO₂
Glasplättchen + TiO₂ + SiO₂ + TiO₂
Glasplättchen + SiO₂ + TiO₂ + SiO₂ + TiO₂
Glasplättchen + Titanoxynitride
Fe₂O₃-Plättchen + TiO₂
Fe₂O₃-Plättchen + Fe₂O₃
Fe₂O₃-Plättchen + Titanoxynitride
Metallplättchen (gegebenenfalls passiviert) + TiO₂
Metallplättchen (gegebenenfalls passiviert) + Fe₂O₃.

TiO₂/Fe₂O₃ bedeutet, dass TiO₂ und Fe₂O₃ in einer Schicht als Gemisch und/oder als Mischoxid in Form des Pseudobrookits (TiFe₂O₅) vorliegen

Geeignete Effektpigmente sind kommerziell erhältlich, z.B. von der Firma BASF Catalysts (vormals Engelhard Corporation) beispielsweise unter den Markennamen Firemist^{®}, Rightfit™, Magnapearl^{®}, von der Firma Merck KGaA unter den Markennamen Iriodin^{®}, Miraval^{®}, Xirallic^{®}, Pyrisma^{®} und Colorstream^{®}.

Zur zusätzlichen Erhöhung der Licht-, Wasser- und Wetterstabilität der Pigmente empfiehlt es sich häufig, in Abhängigkeit vom Einsatzgebiet, das Effektpigment einer Nachbeschichtung oder Nachbehandlung zu unterziehen. Als Nachbeschichtungen bzw. Nachbehandlungen kommen beispielsweise die in den DE-PS 22 15 191, DE-OS 31 51 354, DE-OS 32 35 017 oder DE-OS 33 34 598 beschriebenen Verfahren in Frage. Durch diese Nachbeschichtung wird die chemische Stabilität weiter erhöht oder die Handhabung des Pigments, insbesondere die Einarbeitung in unterschiedliche Medien, erleichtert. Zur Verbesserung der Benetzbarkeit, Dispergierbarkeit und/oder Verträglichkeit mit den Anwendungsmedien können funktionelle Beschichtungen aus Al₂O₃ oder ZrO₂ oder deren Gemische bzw. Mischphasen auf die Pigmentoberfläche aufgebracht werden. Weiterhin sind organische, bzw. organisch/anorganisch kombinierte Nachbeschichtungen möglich, z.B. mit Silanen, wie beispielsweise beschrieben in der EP 0090259, EP 0 634 459, WO 99/57204, WO 96/32446, WO 99/57204, U.S. 5,759,255, U.S. 5,571,851, WO 01/92425 oder in J.J. Ponjee, Philips Technical Review, Vol. 44, No. 3, 81 ff. und P.H. Harding J.C. Berg, J. Adhesion Sci. Technol. Vol. 11 No. 4, S. 471-493.

Der Anteil der plättchenförmigen Effektpigmente in der erfindungsgemäßen Pigmentpräparation liegt im Allgemeinen zwischen 55 und 80 Gew.%, vorzugsweise zwischen 65 und 75 Gew.%, bezogen auf die Pigmentpräparation. Die optimalen Anteile sind für den Fachmann leicht zu ermitteln und hängen im wesentlichen von der Teilchengröße der eingesetzten Effektpigmente, dem Formfaktor der Effektpigmente und der Art des Pigmentaufbaus ab.

Die erfindungsgemäßen Pigmentpräparationen enthalten
55-80 Gew.%, vorzugsweise 65-75 Gew.% Effektpigment
20-45 Gew.%, vorzugsweise 25-35 Gew.% Wachs bzw. Wachsgemisch
0,03-1,5 Gew.%, vorzugsweise 0,03-0,8 Gew. % Antioxidans
und gegebenenfalls
bis zu 10 Gew.% an im Kunststoff- und/oder Lackbereich üblichen Additiven, Hilfsstoffen, Füllstoffen, Farbstoffen und/oder Farbpigmenten, bezogen auf die Gesamtpräparation,
wobei der Gesamtanteil aller Komponenten ≤ 100 Gew.% beträgt.

Erstrebenswert ist ein möglichst hoher Anteil an Effektpigmenten bzw. ein möglichst geringer Anteil an Trägermaterial um möglichst wenig Fremdmaterial in dem zu pigmentierenden Anwendungsmedium, z.B. einem Kunststoff, einzubringen. Es muss jedoch genügend Trägermaterial verwendet werden, um die gewünschten Eigenschaften der erfindungsgemäßen Pigmentpräparation, wie z.B. Nicht-Stauben, verbesserte Rieselfähigkeit oder höherer Durchsatz bei der Masterbatch-Herstellung, zu gewährleisten. Dazu müssen die Teilchen nicht nur mit dem Trägermaterial umhüllt sein, sondern sie müssen auch miteinander zu einem gut rieselfähigen groben "Pulver" verklebt sein.

Die gefährliche Selbsterhitzung von Pigmentpräparationen enthaltend ein Wachs und ein Effektpigment wird durch die Zugabe eines Antioxidans reduziert, so dass eine Klassifizierung als Gefahrgut nach Prüfverfahren N.4 beschrieben im Kapitel 33.3.1.6 der Recommendations on the Transport of Dangerous Good, Manual of Tests and Criteria, nicht mehr erforderlich ist.

Alle dem Fachmann bekannten Antioxidantien sind für die vorliegende Erfindung geeignet, sofern sie mit dem Wachs verträglich sind. Die Antioxidantien behindern bzw. verhindern die thermisch induzierte Oxidation der Wachse in den Anwendungsmedien, wie z.B. in Lacken und Kunststoffen. Sie verhindern die Bildung von freien Radikalen, welche durch Erhitzen in Anwesenheit von Sauerstoff gebildet würden und verhindern gleichzeitig die Verfärbung und/oder Veränderung der mechanischen Eigenschaften der Anwendungsmedien, wie z.B. Kunststoffe, Lacke.

Die Antioxidantien sind ausgewählt aus der Gruppe der
- Lacton/Phospit-Mischungen
- Lacton/Phospit/Phenol-Mischungen
- Phenol/Phosphit-Mischungen
- Phosphite
- Phenole.

Besonders bevorzugte Antioxidantien sind ausgewählt aus der Gruppe
- Tetrakis [methylen-3-(3, 5-di-tert.-butyl-4-hydroxyphenyl -propionat)] methan
- n-Octadecyl-β-(4-hydroxy-3,5-di-tert.-butyl-phenyl)-propionat
- N, N'-Bis (3, 5-di-butyl-4-hydroxyl-phenylpropionyl) hydrazin
- N, N'-Hexan-1, 6-diylbis [3-(3,5-di-tert.-butyl-4-hydroxyphenyl) propionamid]
- Tris(3,5-di-tert.-butyl-4-hydroxybenzyl) isocyanurat
- Tri-(2, 4-di-tert-butyl-phenyl)-phosphit
- Bis (2.4-di-t-butylphenyl) pentaerythritol diphosphit
- Triphenylphosphit
- Trisnonylphenylphosphit
- Diphenylisodecylphosphit
- Diisodecyl phenylphosphat
- Diisooctyl phenylphosphit
- Diphenyl isooctylphosphat
- Phosphorsäure-Alkyl/Aryl-Ester
- Bisphenol A Phosphit
- Dilauryl thiodipropionat
- Distearyl thiodipropionat
- Butyl- und Octyl- Diphenylamin
- Dinonyl Diphenylamin
- 4,4'-Bis (alpha, alpha-dimethylbenzyl) diphenylamin
- 4,4'-Dioctyl Diphenylamin
- Gemisch aus Tetrakis [methylene-3-(3, 5-di-tert-butyl-4-hydroxypfienyl-propionat)] methan und Tri-(2, 4-di-tert-butyl-phenyl)-phosphit (Gewichtsverhältnis 1 : 1)
- Gemisch aus Tetrakis [methylene-3-(3, 5-di-tert-butyl-4=hydroxyphenyl-propionat)] methan und Tri-(2, 4-di-tert-butyl-phenyl)-phosphit (Gewichtsverhältnis 1 : 2)
- Gemisch aus Tetrakis [methylene-3-(3, 5-di-tert-butyl=4-hydroxyphenyl-propionat)] methan und Tri-(2, 4-di-tert-butyl..phenyl)-phosphit (Gewichtsverhältnis 1 : 3)
- Gemisch aus Tetrakis [methylene-3-(3, 5-di-tert-butyl-4-hydroxyphenyl-propionat)] methan und Tri-(2,4-di-tert-butyl-phenyl)-phosphit (Gewichtsverhältnis 1 : 4)
- Gemisch aus n-Octadecyl-β-(4-hydroxy-3,5-di-tert-butyl-phenyl)-propionat und Tri-(2, 4-di-tert-butyl-phenyl)-phosphit (Gewichtsverhältnis 1 :1).

Antioxidantien mit dieser chemischen Zusammensetzung sind im Handel erhältlich, z.B. von der Fa. Ciba Specialty Chemicals:
IRGANOX^{®} 1010, IRGANOX^{O} 1076, IRGANOX^{®} 245: Phenole
IRGANOX^{®} B 225: Phenol/Phosphit-Mischung
IRGANOX^{®} XP 620: Phenol/Phosphit/Phenol-Mischung
IRGAFOS^{®} 168, IRGASFOS^{®} 126: Phosphite
IRGAFOS^{®} XP 60: Lacton/Phosphit-Mischung.
oder z.B. von der Fa. Clariant:
Hostanox 010 (phenolisches Antioxidants: Tetrakismethylene(3,5-di-tert. butyl-4-hydroxyphenyl/hydro-cinnamate).

Die erfindungsgemäße Pigmentpräparation enthält vorzugsweise 0,01-5 Gew.%, insbesondere 0,1 - 2 Gew.%, ganz besonders bevorzugt 0,1-1,0 Gew.% an Antioxidans bezogen auf das eingesetzte Wachs.
In einer weiteren Ausführungsform kann die erfindungsgemäße Pigmentpräparation weitere Additive und/oder Hilfsstoffe enthalten, wie sie für den Einsatz in Anwendungsmedien aus den Bereichen Farben, Lacke, Pulverlacke, Kunststoffe, üblich sind. Derartige Additive und/oder Hilfsstoffe können Gleitmittel, Trennmittel, Stabilisatoren, Antistatika, Flammschutzmittel, Farbmittel, Flexibilisatoren und Weichmacher, Haftvermittler, Treibmittel, Antioxidantien, UV-Absorber, anorganische Füllstoffe, organische polymerverträgliche Lösungsmittel und/oder Tenside sein, wie z.B. Diisoocytphthalat, Phenolderivate, Mineralöle. Einen Überblick über die einsetzbaren Additive und Hilfsstoffe findet sich in Saechtling, Kunststoff Taschenbuch, 27. Ausgabe, Carl Hanser Verlag oder gibt R. Wolf in "Plastics, Additives" in Ullmann's, Encyclopedia of Industrial Chemistry, Internetedition, 7th Edition, 2003.

Die erfindungsgemäße Pigmentpräparation lässt sich retativ leicht herstellen. Gegenstand der vorliegenden Erfindung ist damit auch ein Verfahren zur Herstellung der erfindungsgemäßen Pigmentpräparation, wobei ein oder mehrere plättchenförmige Effektpigmente unter Wärmeeinfluss mit einem Wachs oder einem Wachsgemisch und einem Antioxidans gemischt werden.

So kann gemäß dem erfindungsgemäßen Verfahren z.B. das Effektpigmente vorgelegt werden und mit dem Wachs oder der Lösung (oder wässrigen Emulsionen oder Dispersionen) des Wachses und dem Antioxidans gemischt werden. Falls das Wachs oder Wachsgemisch in Form einer Lösung zugesetzt wird, kann auch das Effektpigment und das Antioxidans in dieser Lösung dispergiert werden und das Lösungsmittel abgedunstet werden. Die Auswahl des Lösungsmittels erfolgt für den Fachmann in naheliegender Weise unter Einbeziehung der Löslichkeiten der eingesetzten Pigmente und insbesondere des eingesetzten Wachses. Das Ausfällen des Trägermaterials aus einer wässrigen Emulsion oder Dispersion mittels pH-Wert-Änderung ist ebenfalls möglich. Weiterhin kann die Herstellung der Pigmentpräparation durch Aufschmelzen des Wachses erfolgen. Das Aufschmelzen des Wachses ist in der vorliegenden Erfindung besonders bevorzugt, weil damit der Einsatz von Lösungsmitteln vermieden werden kann.

Die Herstellung der erfindungsgemäßen Pigmentpräparation durch Aufschmelzen erfolgt vorzugsweise bei Temperaturen von 70 bis 250 °C. Vorzugsweise erfolgt das Verfahren bei Temperaturen oberhalb des Schmelzbereiches des Wachses. Auf diese Weise wird eine besonders gute Durchmischung von Pigment, Antioxidans und Wachs erzielt.

In einer weiteren Ausführungsform des erfindungsgemäßen Verfahrens können der Mischung aus plättchenförmigem Effektpigment, Antioxidans und Trägermaterial weitere, bei der Verarbeitung von Lacken und Kunststoffen übliche Additive und/oder Hilfsstoffe zugesetzt werden. Beispiele für derartige Additive und/oder Hilfsstoffe sind vorab bei der Beschreibung der Pigmentpräparation genannt worden.

Nach Entfernung des Lösungsmittels bzw. nach Erkalten des beim Aufschmelzen aufgebrachten Wachses liegt die Pigmentpräparation als frei fließendes, grobteiliges Pulver vor, das gut weiter verarbeitet werden kann.

Die derart behandelten Effektpigmente stehen in ihrem Glanz den reinen unbehandelten Effektpigmenten nicht nach. Dies ist um so mehr überraschend als die Pigmente in relativ große Mengen in das Wachs eingearbeitet sein können. So kann der Anteil an Wachs in der Pigmentpräparation < 50 Gew.% betragen, vorzugsweise 25-35 Gew.%, ohne dass nach der Verarbeitung Beeinträchtigungen im Glanz zu vermerken sind.

Die Schüttdichte der erfindungsgemäßen Pigmentpräparation ist mindestens um 50 % höher als die Schüttdichte des reinen (unbehandelten) Effektpigmentes.

In dieser Anmeldung wird als Schüttdichte das Verhältnis aus Gewicht/Volumen einer losen Schüttung verstanden.

Die Verwendung der erfindungsgemäßen Pigmentpräparation zur direkten Pigmentierung von Kunststoffen und Lacken und zur Herstellung von Masterbatches ist ebenfalls Gegenstand der vorliegenden Erfindung.

Die direkte Einarbeitung der erfindungsgemäßen Pigmentpräparation in den Kunststoff erfolgt, indem man das Kunststoffgranulat und/oder -pulver mit der Pigmentpräparation mischt. Anschließend wird der mit der erfindungsgemäßen Pigmentpräparation pigmentierte Kunststoff unter Wärmeeinwirkung verformt. Weiterhin können dem Kunststoffgranulat und/oder -pulver bei der Einarbeitung der Pigmentpräparation gegebenenfalls weitere Additive und Pigmente zugesetzt werden. Beispiele für derartige Additive sind vorab bei der Beschreibung der Pigmentpräparation genannt worden. Als Pigmente eignen sich alle dem Fachmann bekannten anorganischen oder organischen Pigmente.

Die Herstellung der Kunststoffgranulat und/oder -pulver/Pigment- Mischung erfolgt in der Regel so, dass in einem geeigneten Mischer, z.B. Taumel- oder Schnellmischer, das Kunststoffgranulat und/oder -pulver vorgelegt, mit eventuellen Zusätzen benetzt wird und danach die Pigmentpräparation zugesetzt und untergemischt wird.

Für den Einsatz der erfindungsgemäßen Pigmentpräparation eignen sich eine ganze Reihe von Kunststoffen, insbesondere thermoplastische Kunststoffe. Bevorzugt handelt es sich bei den Kunststoffen um polare Kunststoffe, es können aber auch bei entsprechend ausgewählten Trägermaterialien unpolare (olefinische) Kunststoffe eingesetzt werden. Beispiele für geeignete Kunststoffe finden sich z.B. in Saechtling, Kunststoff Taschenbuch, 27. Ausgabe, Carl Hanser Verlag.

Weiterhin kann die erfindungsgemäße Pigmentpräparation auch Einsatz finden in Farben, Lacken (Auto- und Industrielacke), Pulverlacken, Druckfarben und Tonern.

Auch für die Herstellung von Masterbatches lässt sich die erfindungsgemäße Pigmentpräparation vorteilhaft einsetzen. Auf diese Weise lassen sich auch die höchsten Anforderungen an die Pigmentdispergierung erfüllen. Die Herstellung der Masterbatches kann dabei sowohl kontinuierlich als auch diskontinuierlich erfolgen, vorzugsweise kontinuierlich, z.B. durch Einsatz von Ein- oder Doppelschneckenextrudern. Vorteilhaft bei der Herstellung von Masterbatches ist die Verwendung von Pulvern oder Grieß der jeweiligen Kunststoffe. Bei Einsatz der erfindungsgemäßen Pigmentpräparationen auf einem Doppelschneckenextruder kann der Durchsatz, je nach Bedingungen, mindestens um den Faktor 2-5 gegenüber dem unpräparierten Pigment gesteigert werden. Weiterhin lassen sich unter Einsatz der erfindungsgemäßen Pigmentpräparation auf einem Einschneckenextruder Masterbatches mit einem Pigmentanteil von bis zur 50 Gew. %, bezogen auf den Masterbatch, herstellen.

Bevorzugt wird die erfindungsgemäße Pigmentpräparation zur Herstellung von Masterbatches eingesetzt. Bei entsprechender Auswahl des Trägermaterials sind sowohl polare als auch unpolare Kunststoffe als Masterbatch-Grundlage geeignet. Es gibt z.B. Pfropfcopolymere, die als Trägermaterial in erfindungsgemäßen Effektpigmentpräparationen sowohl in polaren als auch in unpolaren (olefinischen) Kunststoffen eingesetzt werden können. Beispielsweise eignen sich Ethylen-Acrylsäure-Copolymere sowohl für den Einsatz in polaren als auch für den Einsatz in unpolaren Kunststoffen.

Die nachfolgenden Beispiele sollen die Erfindung näher erläutern, ohne sie jedoch zu begrenzen.

### Beispiele:

### Beispiel 1:

297 g Licowax PE 520 (PE-Wachspulver der Fa. Clariant) und 3 g IRGAZNOX^{®} 1010 (Antioxidans der Fa. Ciba Specialty Chemicals) werden in einem Taumelmischer für 0,5 h homogen vermischt. Anschließend werden 700 g Iriodin^{®} 100 (Perlglanzpigment der Fa. Merck KGaA (mit TiO₂ beschichtetes Glimmerplättchen) zugegeben und es wird weitere 0.5 h vermischt bis eine homogene Vormischung vorliegt.

Die Schüttdichte der Mischung wird bestimmt, indem die Mischung drucklos in einen 250 ml Messzylinder gefüllt und das Gewicht der Schüttung ermittelt wird. Die Schüttdichte ist das Verhältnis aus Gewicht/Volumen und beträgt für die Mischung 290 g/l.

Eine gusseiserne Pfanne wird auf eine Oberflächentemperatur von 220 °C erhitzt. Die komplette Mischung wird langsam unter ständigem Rühren in die Pfanne gegeben und unter ständigem Rühren so lange erhitzt, bis sich das Wachs homogen auf dem Perlglanzpigment verteilt hat. Anschließend wird die homogene Mischung in eine Stahlwanne gegeben und unter weiterem Rühren abgekühlt.

Die erhaltene Pigmentpräparation staubt nicht mehr, rieselt gut und lässt sich auf einem Einschneckenextruder zu Masterbatches mit bis zu ca. 50 Gew.% Pigment, bezogen auf die Gesamtmenge, verarbeitet. Auf einem Doppelschneckenextruder kann, bei gleichem Pigmentanteil, der Durchsatz mit dieser Präparation mindestens um den Faktor 2-5 gesteigert werden (im Vergleich zum unbehandelten Pigment. In alle dem Fachmann bekannten unpolaren (olefinische) Kunststoffe lässt sich die erfindungsgemäße Pigmentpräparation problemlos einarbeiten.

Die Schüttdichte der erhaltenen Pigmentpräparation wird ebenfalls nach dem oben beschriebenen Verfahren ermittelt und beträgt 470 g/l.

### Beispiel 2

Analog Beispiel 1 wird eine Pigmentpräparation hergestellt, allerdings ohne Zusatz des Antioxidans IRGANOX^{®} 1010.
Hier kommt es bereits beim Abkühlvorgang zur Bildung von Glimmnestern, die nur durch Zugabe von Trockeneis vermieden werden können.

Die Schüttdichte der erhaltenen Pigmentpräparation beträgt nach dem unter Beispiel 1 beschriebenen Verfahren 480 g/l, die Schüttdichte der eingesetzten Mischung beträgt 285 g/l.

### Untersuchung des Selbsterhitzungsverhaltehs

Zur Prüfung des Selbsterhitzungsverhaltens der Präparationen gemäß der Beispiele 1 und 2 wird das Prüfverfahren N.4, beschrieben im Kapitel 33.3.1.6. der Recommendations on the Transport of Dangerous Good, Manual of Tests and Criteria, angewendet. Es werden Prüfungen in Drahtkörben mit den Kantenlängen von 25 mm und 100 mm bei Temperaturen von 140 °C durchgeführt, um zu prüfen ob eine spontane Selbstentzündung oder eine gefährliche Selbsterhitzung stattfndet. Grenzkriterium ist dabei ein Temperaturanstieg um mindestens 60 K über die Ofentemperatur innerhalb von 24 h.

### Test 1:

Prüfung der Präparation gemäß Beispiel 1 bei 140 °C im 100 mm Drahtkorb: negativ

### Test 2:

Prüfung der Präparation gemäß Beispiel 1 bei 140°C im 25 mm Drahtkorb: negativ

### Test 3:

Prüfung der Präparation gemäß Beispiel 2 bei 140 °C im 100 mm Drahtkorb: positiv

### Test 4:

Prüfung der Präparation gemäß Beispiel 2 bei 140 °C im 25 mm Drahtkorb: positiv

### Ergebnis:

Während die Pigmentpräparation gemäß Beispiel 2 als Gefahrgut der Klasse 4.2 einzustufen ist, ist Präparation 1 nicht als Gefahrgut nach Klasse 4.2 zu klassifzieren.

### Beispiel 3:

295,5 g Luwax^{®} AH3 Powder (niedermolekulares PE-Wachs der Fa. BASF) und 4,5 g Hostanox 010 (phenolisches Antioxidans der Fa. Clariant) werden in einem Taumelmischer für 0,5 h homogen vermischt. Anschließend werden 700 g Iriodin^{®} 7205 Interferenzpigment der Fa. Merck KGaA: mit TiO₂/SiO₂/TiO₂ beschichtetes Glimmerplättchen) zugegeben und es wird weitere 0,5 h vermischt bis eine homogene Vormischung vorliegt.

Eine gusseiserne Pfanne wird auf eine Oberflächentemperatur von 220 °C erhitzt. Die komplette Mischung wird langsam unter ständigem Rühren in die Pfanne gegeben und unter ständigem Rühren so lange erhitzt, bis sich das Wachs homogen auf dem Interferenzpigment verteilt hat. Anschließend wird die homogene Mischung in eine Stahlwanne gegeben und unter weiterem Rühren abgekühlt.

Die erhaltene Pigmentpräparation staubt nicht mehr, rieselt gut und lässt sich auf einem Einschneckenextruder zu Masterbatches mit bis zu ca. 50 Gew.% Pigment, bezogen auf die Gesamtmenge, verarbeiten Auf einem Doppelschneckenextruder kann, bei gleichem Pigmentanteit, der Durchsatz mit dieser Präparation mindestens um den Faktor 2-5 gesteigert werden (im Vergleich zum unbehandelten Pigment. In alle dem Fachmann bekannten unpolaren (olefinische) Kunststoffe lässt sich die erfindungsgemäße Pigmentpräparation problemlos einarbeiten.

### Beispiel 4:

295,5 g Luwax^{®} AH3 Powder (niedermolekulares PE-Wachs der Fa. BASF) und 4,5 g Hostanox 010 (phenolisches Antioxidans der Fa. Clariant) werden in einem Taumelmischer für 0,5 h homogen vermischt. Anschließend werden 700 g Iriodin^{®} 305 Solar Gold (Goldpigment der Fa. Merck KGaA: mit Fe₂O₃ und TiO₂ und SiO₂ beschichtetes Mehrschichtpigment auf Glimmer) zugegeben und es wird weitere 0,5 h vermischt bis eine homogene Vormischung vorliegt.

Eine gusseiserne Pfanne wird auf eine Oberflächentemperatur von 220 °C erhitzt. Die komplette Mischung wird langsam unter ständigem Rühren in die Pfanne gegeben und unter ständigem Rühren so lange erhitzt, bis sich das Wachs homogen auf dem Interferenzpigment verteilt hat. Anschließend wird die homogene Mischung in eine Stahlwanne gegeben und unter weiterem Rühren abgekühlt.

Die erhaltene Pigmentpräparation staubt nicht mehr, rieselt gut und lässt sich auf einem Einschneckenextruder zu Masterbatches mit bis zu ca. 50 Gew.% Pigment, bezogen auf die Gesamtmenge, verarbeiten. Auf einem Doppelschneckenextruder kann, bei gleichem Pigmentanteil, der Durchsatz, mit dieser Präparation mindestens um den Faktor 2-5 gesteigert werden (im Vergleich zum unbehandelten Pigment. In alle dem Fachmann bekannten unpolaren (olefinische) Kunststoffe lässt sich die erfindungsgemäße Pigmentpräparation problemlos einarbeiten.

### Beispiel 5:

295,5 g Luwax^{®} AH3 Powder (niedermolekulares PE-Wächs der Fa BASF) und 4,5 g Hostanox 010 (phenolisches Antioxidans der Fa. Clariant) werden in einem Taumelmischer für 0,5 h homogen vermischt.

Anschließend werden 700 g Miraval 5311 Scenic White der Fa. Merck KGaA (mit SiO₂ und TiO₂ beschichtetes Glasplättchen) zugegeben und es wird weitere 0,5 h vermischt bis eine homogene Vormischung vorliegt.

Eine gusseiserne Pfanne wird auf eine Oberflächentemperatur von 220 °C erhitzt. Die komplette Mischung wird langsam unter ständigem Rühren in die Pfanne gegeben und unter ständigem Rühren so lange erhitzt, bis sich das Wachs homogen auf dem Interferenzpigment verteilt hat. Anschließend wird die homogene Mischung in eine Stahlwanne gegeben und unter weiterem Rühren abgekühlt.

Die erhaltene Pigmentpräparation staubt nicht mehr, rieselt gut und lässt sich auf einem Einschneckenextruder zu Masterbatches mit bis zu ca. 50 Gew.% Pigment, bezogen auf die Gesamtmenge, verarbeiten. Auf einem Doppelschneckenextruder kann, bei gleichem Pigmentanteil, der Durchsatz mit dieser Präparation mindestens um den Faktor 2-5 gesteigert werden (im Vergleich zum unbehandelten Pigment. In alle dem Fachmann bekannten unpolaren (olefinische) Kunststoffe lässt sich die erfindungsgemäße Pigmentpräparation problemlos einarbeiten.

### Beispiel 6:

295,5 g Luwax^{®} AH3 Powder (niedermolekulares PE-Wachs der Fa. BASF) und 4,5 g Hostanox O10 (phenolisches Antioxidans der Fa. Clariant) werden in einem Taumelmischer für 0,5 h homogen vermischt. Anschließend werden 700 g Colorstream Autumn Mystery (Farbflopigment der Fa. Merck KGaA: mit Fe₂O₃ beschichtetes SiO₂-Plättchen) zugegeben und es wird weitere 0,5 h vermischt bis eine homogene Vormischung vorliegt.

Eine gusseiserne Pfanne wird auf eine Oberflächentemperatur von 220 °C erhitzt. Die komplette Mischung wird langsam unter ständigem Rühren in die Pfanne gegeben und unter ständigem Rühren so lange erhitzt, bis sich das Wachs homogen auf dem Interferenzpigment verteilt hat.

Anschließend wird die homogene Mischung in eine Stahlwanne gegeben und unter weiterem Rühren abgekühlt.

Die erhaltene Pigmentpräparation staubt nicht mehr, rieselt gut und lässt sich auf einem Einschneckenextruder zu Masterbatches mit bis zu ca. 50 Gew.% Pigment, bezogen auf die Gesamtmenge, verarbeiten. Auf einem Doppelschneckenextruder kann, bei gleichem Pigmentanteil, der Durchsatz mit dieser Präparation mindestens um den Faktor 2-5 gesteigert werden (im Vergleich zum unbehandelten Pigment. In alle dem Fachmann bekannten unpolaren (olefinische) Kunststoffe lässt sich die erfindungsgemäße Pigmentpräparation problemlos einarbeiten.

## Patentansprüche

1. Pigmentpräparation, **dadurch gekennzeichnet, dass** sie
55-80 Gew.% ein oder mehrerer plättchenförmiger Effektpigmente,
20-45 Gew.% Wachs oder Wachsgemisch und
0,03-1,5 Gew.% mindestens eines Antioxidans,
bezogen auf die Pigmentpräparation, enthält,
wobei
das Wachs oder Wachsgemisch ausgewählt ist aus der Gruppe Naturwachs, modifiziertes Naturwachs, teilsynthetisches Wachs, vollsynthetisches Wachs, Amidwachs, chlor- oder fluorhaltiges Polyolefinwachs,
und
das Antioxidans ausgewählt ist aus der Gruppe der
- Lacton/Phospit-Mischungen
- Lacton/Phospit/Phenol-Mischungen
- Phenol/Phosphit-Mischungen
- Phosphite
- Phenole.

2. Pigmentpräparation nach Anspruch 1, **dadurch gekennzeichnet, dass** das Wachs ein vollsynthetisches Wachs ist.

3. Pigmentpräparation nach Anspruch 1 oder 2, **dadurch gekennzeichnet, dass** das Wachs ein nicht oder teilweise oxidiertes Polyolefinwachs ist.

4. Pigmentpräparation nach einem oder mehreren der Ansprüche 1 bis 3, **dadurch gekennzeichnet, dass** das Wachs ein Polyethylenwachs oder ein Polypropylenwachs ist.

5. Pigmentpräparation nach einem oder mehreren der Ansprüche 1 bis 4. **dadurch gekennzeichnet, dass** das Wachs oder Wachsgemisch einen Schmelzbereich von 70 - 200 °C (bestimmt nach DIN 51007) aufweist.

6. Pigmentpräparation nach einem oder mehreren der Ansprüche 1 bis 5, **dadurch gekennzeichnet, dass** das Effektpigment ausgewählt ist aus der Gruppe Perlglanzpigment, Interferenzpigment, Metalleffektpigment, Mehrschichtpigment mit transparenten, semitransparenten und/oder opaken Schichten, holographisches Pigment, BiOCl- und/oder LCP-Pigment.

7. Pigmentpräparation nach einem oder mehreren der Ansprüche 1 bis 6, **dadurch gekennzeichnet, dass** das Effektpigment folgenden Aufbau besitzt:
Substratplättchen + TiO₂ (Rutil)
Substratplättchen + TiO₂ (Rutil)+ Fe₂O₃
Substratplättchen + Fe₂O₃
Substratplättchen + Fe₃O₄
Substratplättchen + SiO₂ + TiO₂ (Rutil)
Substratplättchen + TiO₂ (Rutil) + SiO₂ + TiO₂ (Rutil)
Substratplättchen + TiO₂ (Anatas) + SiO₂ + TiO₂ (Anatas).

8. Pigmentpräparation nach einem oder mehreren der Ansprüche 1 bis 7, **dadurch gekennzeichnet, dass** die Effektpigmente folgenden Schichtaufbau besitzen:
Glimmerplättchen + TiO₂
Glimmerplättchen + TiO₂ + Fe₂O₃
Glimmerplättchen + TiO₂/Fe₂O₃
Glimmerplättchen + Fe₂O₃
Glimmerplättchen + Fe₃O₄
Glimmerplättchen + Titanoxynitride
Glimmerplättchen + TiO₂ + SiO₂ + TiO₂
Glimmerplättchen + TiO₂/Fe₂O₃
Glimmerplättchen + TiO₂/Fe₂O₃ + SiO₂ + TiO₂
Glimmerplättchen + TiO₂/Fe₂O₃ + SiO₂ + TiO₂/Fe₂O₃
Glimmerplättchen + TiO₂ + SiO₂ + TiO₂/Fe₂O₃
Al₂O₃-Plättchen + TiO₂
Al₂O₃-Plättchen + Fe₂O₃
Al₂O₃-Plättchen + Titanoxynitride
SiO₂-Plättchen + TiO₂
SiO₂-Plättchen + Fe₂O₃
SiO₂-Plättchen + Titanoxynitride
Glasplättchen + TiO₂
Glasplättchen + Fe₂O₃
Glasplättchen + TiO₂ + Fe₂O₃
Glasplättchen + SiO₂ + TiO₂
Glasplättchen + SiO₂ + Fe₂O₃
Glasplättchen + SiO₂ + TiO₂ + Fe₂O₃
Glasplättchen + SiO₂ + TiO₂ + SiO₂
Glasplättchen + TiO₂ + SiO₂ + TiO₂
Glasplättchen + SiO₂ + TiO₂ + SiO₂ + TiO₂
Glasplättchen + Titanoxynitride
Fe₂O₃-Plättchen + TiO₂
Fe₂O₃₋Plättchen + Fe₂O₃
Fe₂O₃-Plättchen + Titanoxynitride
Metallplättchen (gegebenenfalls passiviert) + TiO₂
Metallplättchen (gegebenenfalls passiviert) + Fe₂O₃.

9. Pigmentpräparation nach einem oder mehreren der Ansprüche 1 bis 8, **dadurch gekennzeichnet, dass** der Anteil an Antioxidans 0,01-5 Gew.% bezogen auf das eingesetzte Wachs beträgt.

10. Pigmentpräparation nach einem oder mehreren der Ansprüche 1 bis 9, **dadurch gekennzeichnet, dass** die Pigmentpräparation zusätzlich ein oder mehrere Additive, Hilfsstoffe, anorganische Füllstoffe, Farbstoffe und/oder Farbpigmente enthält.

11. Verfahren zur Herstellung einer Pigmentpräparation nach einem oder mehreren der Ansprüche 1 bis 10, **dadurch gekennzeichnet, dass** ein oder mehrere plättchenförmige Effektpigmente und mindestens ein Antioxidans unter Wärmeeinfluss mit einem Wachs oder Wachsgemisch gemischt werden.

12. Verwendung der Pigmentpräparation nach einem oder mehreren der Ansprüche 1 bis 10 zur Pigmentierung von Farben, Lacken, Pulverlacken, Druckfarben, Kunststoffen, Tonern und zur Herstellung von Masterbatches.

## Claims

1. Pigment preparation, **characterised in that** it comprises
55-80% by weight of one or more flake-form effect pigments,
20-45% by weight of wax or wax mixture and
0.03-1.5% by weight of at least one antioxidant,
based on the pigment preparation,
where
the wax or wax mixture is selected from the group natural wax, modified natural wax, partially synthetic wax, fully synthetic wax, amide wax, chlorine- or fluorine-containing polyolefin wax,
and
the antioxidant is selected from the group of the
- lactone/phosphite mixtures
- lactone/phosphite/phenol mixtures
- phenol/phosphite mixtures
- phosphites
- phenols.

2. Pigment preparation according to Claim 1, **characterised in that** the wax is a fully synthetic wax.

3. Pigment preparation according to Claim 1 or 2, **characterised in that** the wax is an unoxidised or partially oxidised polyolefin wax.

4. Pigment preparation according to one or more of Claims 1 to 3, **characterised in that** the wax is a polyethylene wax or a polypropylene wax.

5. Pigment preparation according to one or more of Claims 1 to 4, **characterised in that** the wax or wax mixture has a melting range from 70 - 200°C (determined in accordance with DIN 51007).

6. Pigment preparation according to one or more of Claims 1 to 5, **characterised in that** the effect pigment is selected from the group pearlescent pigment, interference pigment, metal-effect pigment, multilayered pigment having transparent, semitransparent and/or opaque layers, holographic pigment, BiOCl and/or LCP pigment.

7. Pigment preparation according to one or more of Claims 1 to 6, **characterised in that** the effect pigment has the following structure:
substrate flake + TiO₂ (rutile)
substrate flake + TiO₂ (rutile) + Fe₂O₃
substrate flake + Fe₂O₃
substrate flake + Fe₃O₄
substrate flake + SiO₂ + TiO₂ (rutile)
substrate flake + TiO₂ (rutile) + SiO₂ + TiO₂ (rutile)
substrate flake + TiO₂ (anatase) + SiO₂ + TiO₂ (anatase).

8. Pigment preparation according to one or more of Claims 1 to 7, **characterised in that** the effect pigments have the following layer structure:
mica flake + TiO₂
mica flake + TiO₂ + Fe₂O₃
mica flake + TiO₂/Fe₂O₃
mica flake + Fe₂O₃
mica flake + Fe₃O₄
mica flake + titanium oxynitride
mica flake + TiO₂ + SiO₂ + TiO₂
mica flake + TiO₂/Fe₂O₃
mica flake + TiO₂/Fe₂O₃ + SiO₂ + TiO₂
mica flake + TiO₂/Fe₂O₃ + SiO₂ + TiO₂/Fe₂O₃
mica flake + TiO₂ + SiO₂ + TiO₂/Fe₂O₃
Al₂O₃ flake + TiO₂
Al₂O₃ flake + Fe₂O₃
Al₂O₃ flake + titanium oxynitride
SiO₂ flake + TiO₂
SiO₂ flake + Fe₂O₃
SiO₂ flake + titanium oxynitride
glass flake + TiO₂
glass flake + Fe₂O₃
glass flake + TiO₂ + Fe₂O₃
glass flake + SiO₂ + TiO₂
glass flake + SiO₂ + Fe₂O₃
glass flake + SiO₂ + TiO₂ + Fe₂O₃
glass flake + SiO₂ + TiO₂ + SiO₂
glass flake + TiO₂ + SiO₂ + TiO₂
glass flake + SiO₂ + TiO₂ + SiO₂ + TiO₂
glass flake + titanium oxynitride
Fe₂O₃ flake + TiO₂
Fe₂O₃ flake + Fe203
Fe₂O₃ flake + titanium oxynitride
metal flake (optionally passivated) + TiO₂
metal flake (optionally passivated) + Fe₂O₃.

9. Pigment preparation according to one or more of Claims 1 to 8, **characterised in that** the proportion of antioxidant is 0.01-5% by weight, based on the wax employed.

10. Pigment preparation according to one or more of Claims 1 to 9, **characterised in that** the pigment preparation additionally comprises one or more additives, assistants, inorganic fillers, dyes and/or coloured pigments.

11. Process for the preparation of a pigment preparation according to one or more of Claims 1 to 10, **characterised in that** one or more flake-form effect pigments and at least one antioxidant are mixed with a wax or wax mixture under the influence of heat.

12. Use of the pigment preparation according to one or more of Claims 1 to 10 for the pigmentation of paints, coatings, powder coatings, printing inks, plastics, toners and for the preparation of masterbatches.

## Revendications

1. Préparation de pigments, **caractérisée en ce qu'**elle comprend :
55-80% en poids d'un ou de plusieurs pigment(s) d'effet sous forme de flocons,
20-45% en poids de cire ou d'un mélange de cires et
0,03-1,5% en poids d'au moins un antioxydant,
sur la base de la préparation de pigments,
dans laquelle :
la cire ou le mélange de cires est choisi(e) parmi le groupe constitué par une cire naturelle, une cire naturelle modifiée, une cire partiellement synthétique, une cire totalement synthétique, une cire amide, une cire polyoléfine contenant du chlore ou du fluor,
et
l'antioxydant est choisi parmi le groupe constitué par :
- des mélanges lactone/phosphite
- des mélanges lactone/phosphite/phénol
- des mélanges phénol/phosphite
- des phosphites
- des phénols.

2. Préparation de pigments selon la revendication 1, **caractérisée en ce que** la cire est une cire totalement synthétique.

3. Préparation de pigments selon la revendication 1 ou 2, **caractérisée en ce que** la cire est une cire polyoléfine non oxydée ou partiellement oxydée.

4. Préparation de pigments selon une ou plusieurs des revendications 1 à 3, **caractérisée en ce que** la cire est une cire polyéthylène ou une cire polypropylène.

5. Préparation de pigments selon une ou plusieurs des revendications 1 à 4, **caractérisée en ce que** la cire ou le mélange de cires présente une plage de fusion de 70 - 200°C (déterminée conformément à DIN 51007).

6. Préparation de pigments selon une ou plusieurs des revendications 1 à 5, **caractérisée en ce que** le pigment d'effet est choisi parmi le groupe constitué par un pigment perlescent, un pigment d'interférence, un pigment d'effet métallique, un pigment multicouche comportant des couches transparentes, semi-transparentes et/ou opaques, un pigment holographique, un pigment BiOCl et/ou LCP.

7. Préparation de pigments selon une ou plusieurs des revendications 1 à 6, **caractérisée en ce que** le pigment d'effet présente la structure qui suit :
flocon de substrat + TiO₂ (rutile)
flocon de substrat + TiO₂ (rutile) + Fe₂O₃
flocon de substrat + Fe₂O₃
flocon de substrat + Fe₃O₄
flocon de substrat + SiO₂ + TiO₂ (rutile)
flocon de substrat + TiO₂ (rutile) + SiO₂ + TiO₂ (rutile)
flocon de substrat + TiO₂ (anatase) + SiO₂ + TiO₂ (anatase).

8. Préparation de pigments selon une ou plusieurs des revendications 1 à 7, caractérisée en ce le pigment d'effet présente la structure en couches qui suit :
flocon de mica + TiO₂
flocon de mica + TiO₂ + Fe₂O₃
flocon de mica + TiO₂/Fe₂O₃
flocon de mica + Fe₂O₃
flocon de mica + Fe₃O₄
flocon de mica + oxynitrure de titane
flocon de mica + TiO₂ + SiO₂ + TiO₂
flocon de mica + TiO₂/Fe₂O₃
flocon de mica + TiO₂/Fe₂O₃ + SiO₂ + TiO₂
flocon de mica + TiO₂/Fe₂O₃ + SiO₂ + TiO₂/Fe₂O₃
flocon de mica + TiO₂ + SiO₂ + TiO₂/Fe₂O₃
flocon d'Al₂O₃ + TiO₂
flocon d'Al₂O₃ + Fe₂O₃
flocon d'Al₂O₃ + oxynitrure de titane
flocon de SiO₂ + TriO₂
flocon de SiO₂ + Fe₂O₃
flocon de SiO₂ + oxynitrure de titane
flocon de verre + TiO₂
flocon de verre + Fe₂O₃
flocon de verre + TiO₂ + Fe₂O₃
flocon de verre + SiO₂ + TiO₂
flocon de verre + SpiO₂ + Fe₂O₃
flocon de verre + SiO₂ + TiO₂ + Fe₂O₃
flocon de verre + SiO₂ + TiO₂ + SiO₂
flocon de verre + TiO₂ + SiO₂ + TriO₂
flocon de verre + SiO₂ + TiO₂ + SiO₂ + TiO₂
flocon de verre + oxynitrure de titane
flocon de Fe₂O₃ + TiO₂
flocon de Fe₂O₃ + Fe₂O₃
flocon de Fe₂O₃ + oxynitrure de titane
flocon de métal (en option passivé) + TiO₂
flocon de métal (en option passivé) + Fe₂O₃.

9. Préparation de pigments selon une ou plusieurs des revendications 1 à 8, **caractérisée en ce que** la proportion d'antioxydant est de 0,01-5% en poids, sur la base de la cire utilisée.

10. Préparation de pigments selon une ou plusieurs des revendications 1 à 9, **caractérisée en ce que** la préparation de pigments comprend de façon additionnelle un ou plusieurs additif(s), assistant(s), agent(s) de remplissage inorganique(s), colorant(s) et/ou pigment(s) coloré(s).

11. Procédé pour la préparation d'une préparation de pigments selon une ou plusieurs des revendications 1 à 10, **caractérisé en ce qu'**un ou plusieurs pigment(s) d'effet sous forme de flocons et au moins un antioxydant sont mélangés avec une cire ou un mélange de cires sous l'influence de la chaleur.

12. Utilisation de la préparation de pigments selon une ou plusieurs des revendications 1 à 10 pour la pigmentation de peintures, de revêtements, de revêtements pulvérulents, d'encres d'impression, de matières plastiques, de toners et pour la préparation de lots maîtres.
